# EUROPEAN PATENT APPLICATION

(11) **EP 1 840 509 A1**
(43) Date of publication of application: **03.10.2007**
(21) Application number: 05814159.9
(22) Date of filing: 09.12.2005
(51) Int. Cl.: G01C 21/00, G08G 1/0969, G09B 29/10

(54) **DISPLAY CONTROLLER**

(30) Priority: 21.01.2005 JP 2005014338
(71) Applicant: MATSUSHITA ELECTRIC INDUSTRIAL CO., LTD., Osaka 571-8501 (JP)
(72) Inventor: KUDO, Takahiro c/o Matsushita Elec. Ind. Co. Ltd., Osaki-shi, Osaka 540-6319 (JP); KAWASE, Kazushi c/o Matsushita Elec. Ind. Co. Ltd., Osaki-shi, Osaka 540-6319 (JP)
(74) Representative: Pautex Schneider, Nicole Véronique
(86) International application number: PCT/JP2005/022638
(87) International publication number: WO 2006/077698

(57) **Abstract**

The present invention provides a display controller which can prevent a display from displaying the unnecessary information on the video to improve visibility in displaying the video.

The display controller comprises a controller for controlling a display to display a video (37) and navigation information (31 to 36) on respective video and navigation display areas (38, 30) allocated to a screen of the display, wherein the controller permits the concern information (34, 35) concerned with a user among the navigation information (31 to 36) to be displayed on the video display area (38) in addition to the navigation display area (30).

## Description

### Technical Field

The present invention relates to a display controller, and more particularly to a display controller mounted in a vehicle, for controlling a display to display a video and navigation information.

### Background Art

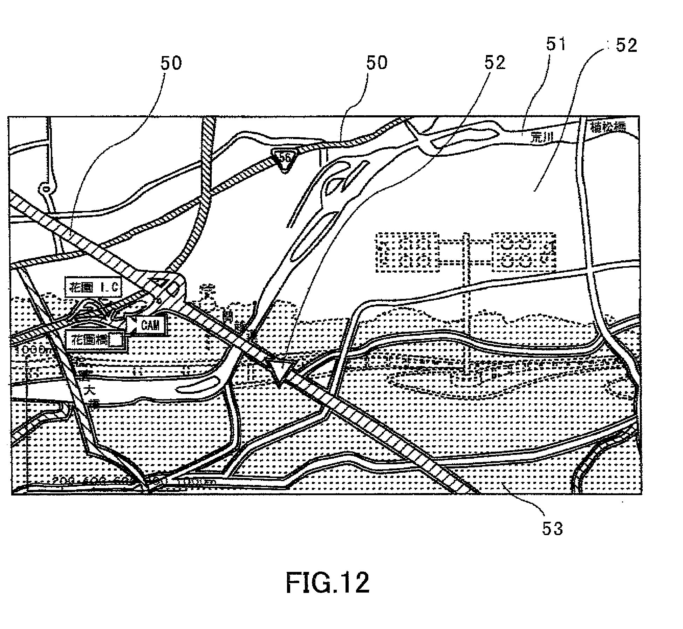

As shown in FIG. 12, the conventional display controller is designed to control a display to display a predetermined kind of information, such as a road 50, a river 51, and a vehicle marker 52, among navigation information on a screen of the display, and designed to perform transparent processing to other areas 53 and 54 on the screen to permit a video taken by a camera to be displayed (see, for example, Patent Document 1).
Patent Document 1: Japanese Patent Laid-Open Publication 2004-125446 (page 6 and FIG. 5)

### Disclosure of Invention

### Problem to be Solved by the Invention

The conventional display controller has a problem that information displayed on the video taken by the camera is unnecessary for a user because of superimposing the predetermined kind of information onto the video.

The present invention provides a display controller that can prevent a display from displaying the unnecessary information on the video to improve visibility in displaying the video.

### Means for Resolving the Problem

According to one aspect of the present invention, there is provided a display controller comprising a controller for controlling a display to display a video and navigation information in respective video and navigation display areas allocated to a screen of the display, wherein the controller permits concern information concerned with a user among the navigation information to be displayed in the video display area.

In accordance with the above construction, the display controller according to the present invention permits only the concern information among the navigation information to be displayed in the video display area. The display controller can therefore prevent the display from displaying the unnecessary information on the video to improve visibility in displaying the video.

The controller may perform image synthesis of the video and an image of the concern information to be displayed in the video display area, for an area where the concern information is displayed in the video display area.

In accordance with the above construction, the display controller according to the present invention can permit the concern information and the video to be displayed in the video display area.

The controller may superimpose the image of the concern information to be displayed in the video display area on the video to perform the image synthesis.

In accordance with the above construction, the display controller according to the present invention can permit the concern information to be visible in the video display area.

The controller may combine transparently the image of the concern information to be displayed in the video display area with the video to perform the image synthesis.

In accordance with the above construction, the display controller according to the present invention permit the video displayed with the concern information in the video display area to be visible. The display controller can therefore improve visibility of the video

The controller may transform an image of the navigation information, under the state that an area indicative of an approaching object in the video and an area of an image of the concern information are to be displayed with an overlap area in the video display area, to eliminate the overlap area.

In accordance with the above construction, the display controller according to the present invention can improve visibility of the area indicative of the approaching object in the video in spite of display of the concern information.

The controller may change a scale of the image of the navigation information to transform the image of the navigation information.

In accordance with the above construction, the display controller according to the present invention can eliminate the overlap area between the area indicative of the approaching obj ect in the video on the video display area and the display area of the image of the concern information by changing the scale of the image of the navigation information.

The controller may displace a display position of the image of the navigation information to transform the image of the navigation information.

In accordance with the above construction, the display controller according to the present invention can eliminate the overlap area between the area indicative of the approaching object in the video on the video display area and the display area of the image of the concern information by displacing the display position of the image of the navigation information.

The controller may permit the concern information concerned with a user driving history to be displayed.

In accordance with the above construction, the display controller according to the present invention can select the concern information concerned with the user from the navigation information on the basis of the user driving history.

The controller may permit the concern information concerned with a route search result of the user to be displayed.

In accordance with the above construction, the display controller according to the present invention can select the concern information concerned with the user from the navigation information on the basis of the route search result.

The controller may permit the concern information concerned with a route search history of the user to be displayed.

In accordance with the above construction, the display controller according to the present invention can select the concern information concerned with the user from the navigation information on the basis of the route search history.

The controller may permit the concern information concerned with a current position of the user to be displayed.

In accordance with the above construction, the display controller according to the present invention can select the concern information concerned with the user from the navigation information on the basis of the current position.

The controller may permit the concern information concerned with a current time to be displayed.

In accordance with the above construction, the display controller according to the present invention can select the concern information concerned with the user from the navigation information on the basis of the current time.

### Effects of the Invention

The present invention provides the display controller that can prevent a display from displaying the unnecessary information on the video to improve visibility in displaying the video.

### Brief Description of the Drawings

[FIG. 1] FIG. 1 is a block diagram of a navigation system of a first preferred embodiment in accordance with the present invention.
[FIG. 2] FIG. 2 is an explanation view illustrating driving history referenced by the first preferred embodiment of the navigation system according to the present invention.
[FIG. 3] FIG. 3 is a schematic diagram illustrating one example of position where cameras constituting the first preferred embodiment of the navigation system according to the present invention are provided.
[FIG. 4] FIG. 4 is a flow chart illustrating a display switching operation of a CPU constituting the first preferred embodiment of the navigation system according to the present invention.
[FIG. 5] FIG. 5 is an image illustrating one example of display on a screen of a display in each modes of the CPU constituting the first preferred embodiment of the navigation system according to the present invention.
[FIG. 6] FIG. 6 is an explanation view illustrating a camera switching rule of the first preferred embodiment of the navigation system according to the present invention.
[FIG. 7] FIG. 7 is a flow chart illustrating a display control operation to a video display area in the first preferred embodiment according to the present invention.
[FIG. 8] FIG. 8 is a flow chart illustrating a display control operation to a navigation display area in accordance with the first preferred embodiment of the present invention.
[FIG. 9] FIG. 9 is a flow chart illustrating a display control operation of a second preferred embodiment of the present invention.
[FIG. 10] FIG. 10 illustrates one example of displayed images of the second preferred embodiment in accordance with the present invention.
[FIG. 11] FIG. 11 illustrates another example of displayed images of the second preferred embodiment in accordance with the present invention.
[FIG. 12] FIG. 12 illustrates a prior art displayed images.

### Explanation of Reference Numerals

- 1: navigation system
- 2: CPU
- 3: ROM
- 4: RAM
- 5: large-capacity storage
- 6: media drive
- 7: input device
- 8: display
- 9: GPS receiver
- 10: gyro
- 11: vehicle speed sensor
- 12: FM receiver
- 13, 14: camera

### Description of the Preferred Embodiments

The preferred embodiments of the present invention are described hereinafter with reference to the drawings.

In the preferred embodiments, a display controller according to the present invention is applied to a navigation system mounted in a vehicle and a controller according to the present invention is constituted by a Central Processing Unit (CPU).

### (First Preferred Embodiment)

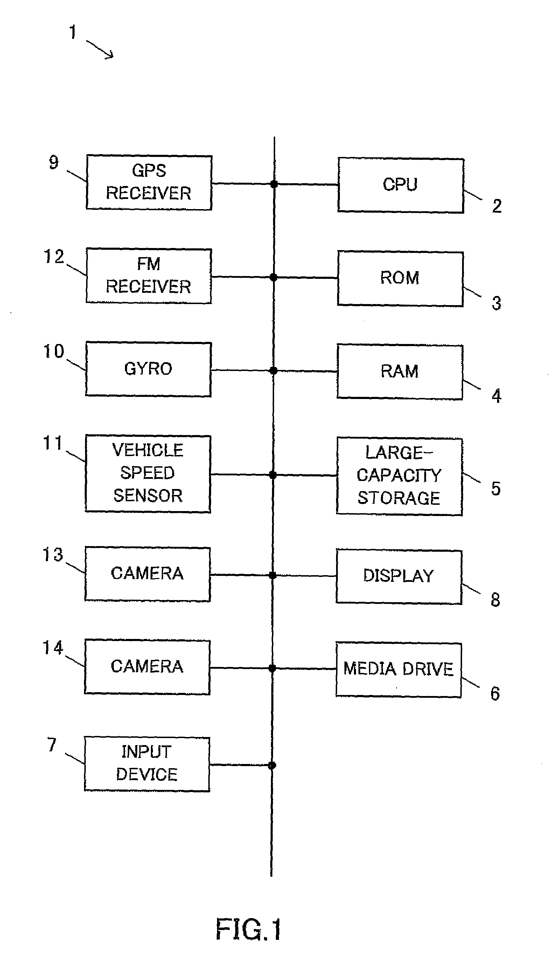

The FIG. 1 illustrates the navigation system of the first preferred embodiment.

The navigation system 1 comprises a CPU 2, a Read Only Memory (ROM) 3, a Random Access Memory (RAM) 4, a large-capacity storage 5 such as a hard disc device, a media drive 6 for reading information from a removable media such as a Digital Versatile Disc (DVD), an input device 7 constituted by a keyboard, a pointing device, a touch panel, and the like, display 8 constituted by a liquid crystal display and the like, a Global Positioning System (GPS) receiver for measuring latitude and longitude of a current position based on electric waves received from a plurality of satellites to a GPS antenna, a gyro 10 for detecting a traveling orientation of the vehicle, a vehicle speed sensor 11 for detecting a traveling speed of the vehicle, a Frequency Modulation (FM) receiver for receiving and encoding Vehicle Information and Communication System (VICS) information, and cameras 13 and 14 to take respective videos of outward from the vehicle.

The CPU 2 reads a program, which includes a display control program for controlling the display 8, from the ROM 3 or the large-capacity storage 5 into RAM 4. The CPU 2 executes the program stored in the RAM 4 to control each part of features of the navigation system 1, such as the display 8.

The large-capacity storage 5 stores therein map information, driving history of the vehicle, history of route search data, and the like in addition to the above mentioned program.

The map information includes feature information and road information. The feature information includes information indicative of features (such as roads, cross-roads, structures, and rivers) and information of representation and advertisement about the features. The road information is concerned with road traffic regulation, such as the number of traffic lanes and the existence of one-way roads. The map information is, for example, read from the DVD into the large-capacity storage 5 via the media drive 6, upon the CPU 2 executing the program.

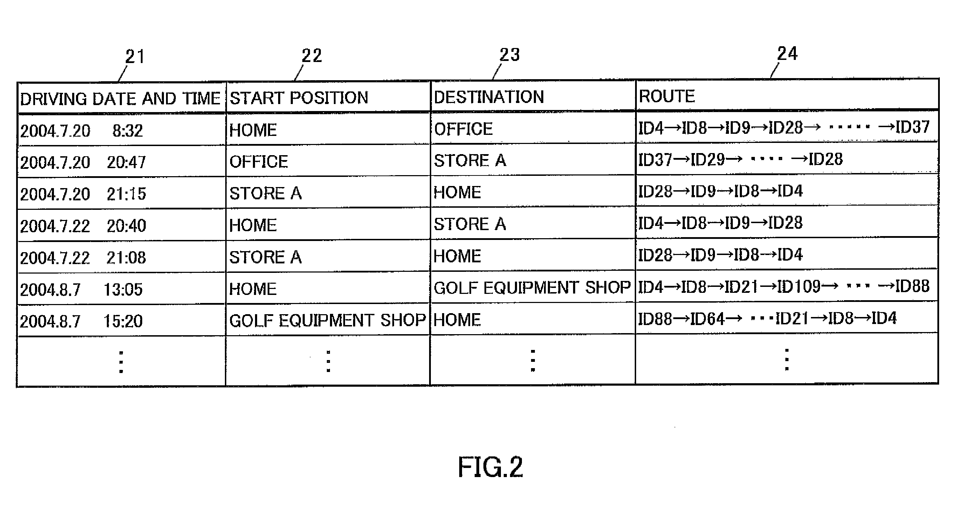

The driving history is generated from, for example, the position of the vehicle obtained by the GPS receiver 9, the traveling orientation of the vehicle detected by the gyro 10, and the traveling speed of the vehicle detected by the vehicle speed sensor 11. The driving history is generated by the CPU2 executing the program. As shown in FIG. 2, the driving history includes information 21 indicative of driving date and time, information 22 indicative of start positions, information 23 indicative of destinations, and route information 24 constituted by an array of ID assigned to each features such as the roads and the cross-roads.

The route search data indicates the route from the start position set by user to the destination set by the user. The start position and the destination are set with the input device 7. The route search data includes information indicative of driving date and time, information indicative of start positions, information indicative of destinations, and route information, in similar to the driving history shown in FIG. 2.

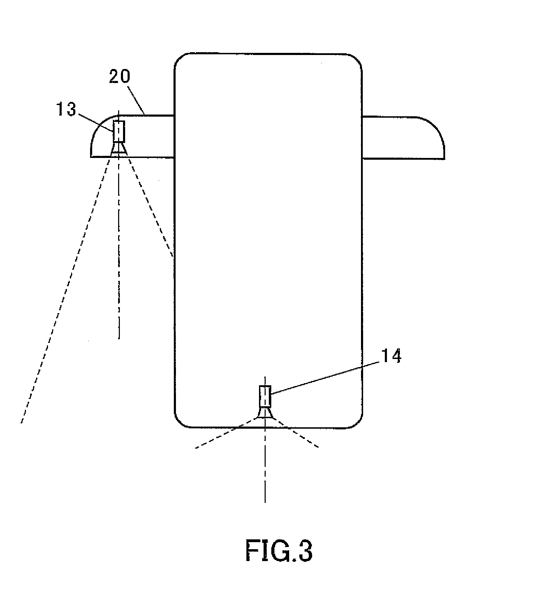

As shown in FIG. 3, the cameras 13 and 14 are respectively provided a door mirror 20 on the left side of the vehicle and the back portion of the vehicle to take the respective videos of left and center rearwards from the vehicle. In this embodiment, there are described two cameras 13 and 14, but it is not intended to limit the number of cameras and the camera directions in the present invention.

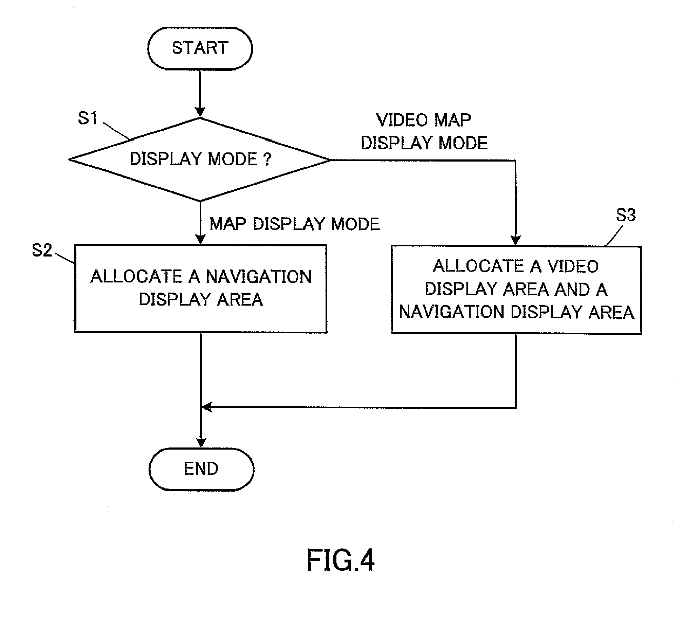

The operation of the navigation system 1 thus constructed is described hereinafter with reference to FIGS. 4 to 8.

In this embodiment, the CPU 2 has two different display modes. These modes are a map display mode and a video map display mode. The display modes are switched to each other on the basis of the position of the vehicle obtained by the GPS receiver 9, the traveling orientation of the vehicle detected by the gyro 10, the traveling speed of the vehicle detected by the vehicle speed sensor 11, an input operation by the user via the input device 7, and the like.

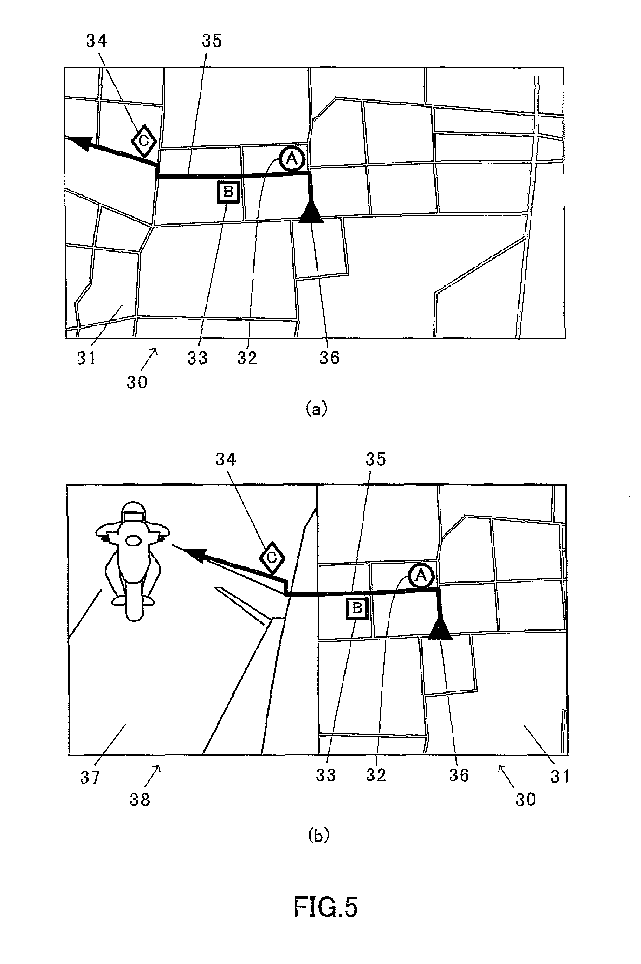

FIG. 4 is a flow chart illustrating a display mode switching operation of the CPU2 executing the display control program, and FIG. 5 is an image illustrating one example of display on a screen of the display 8 in each modes.

As shown in FIG. 5 (a), under the map display mode (S1 in FIG. 4), the CPU 2 allocates a navigation display area 30 where the navigation information is to be displayed to the screen of the display 8 (S2).

The navigation information includes the feature information, the route search data, a vehicle marker, traffic and advertisement information, and the like. The feature information is included in the map information. The vehicle marker indicates the vehicle. The traffic and advertisement information, such as a degree of a traffic jam and the road traffic regulation, is obtained from the VICS information.

The navigation display area 30, for example, displays a map 31 from the map information about an area specified on the basis of the position of the vehicle obtained by the GPS receiver 9. The navigation display area 30 displays landmarks 32, 33, 34 indicating the respective specified features, and the route search data 35, and the vehicle marker 36, which are on the map 31.

As shown in FIG. 5 (b), under the video map display mode (S 1 in FIG. 4), the CPU 2 allocates a video display area 38 where the video 37 taken by the camera 13 or 14 is to be displayed and the navigation display area 30 to the screen of the display 8 (S3).

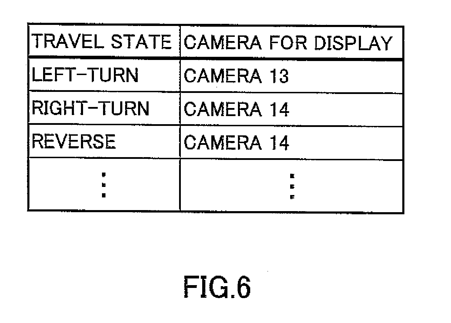

The CPU 2 selects one of the cameras 13 and 14 to get the video 37 on the basis of states of a direction indicator and a transmission which are provided on the vehicle, the traveling orientation of the vehicle detected by the gyro 10, the traveling speed of the vehicle detected by the vehicle speed sensor 11, and the like. For example, the CPU 2 selects one of the cameras 13 and 14 in comply with a camera switching rule, as shown in FIG 6, relating to a running state including left-turn, right-turn and reverse.

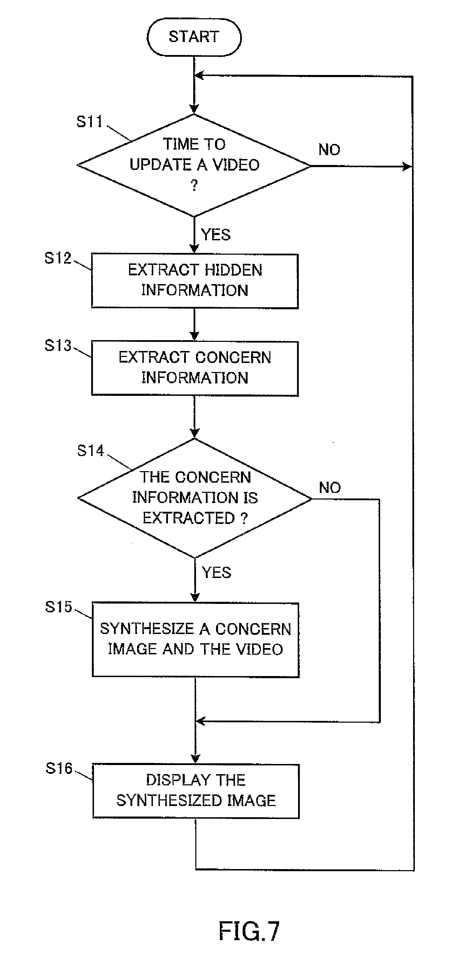

FIG. 7 is a flow chart illustrating a display control operation to the video display area by the CPU 2 executing the display control program. The display control operation to the video display area is executed by the CPU2 in the video map display mode.

The CPU 2 firstly decides whether or not a current time is to be for updating the video displayed on the video display area (S11). If the CPU 2 decides that the current time is to be for the updating, the CPU 2 extracts hidden information (S12).

The hidden information is constituted by some parts of the navigation information. The parts were to be displayed on the video display area if the navigation information was to be displayed over the video display area and the navigation display areas.

The CPU 2 then extracts concern information from the hidden information (S13). The concern information is such as navigation route information and travel information about the route, and concerned with the user. The concern information is selected on the basis of various types of information included in the navigation information, such as the driving history of the vehicle, the route search data, the history of the route search data, the current position, the current time, and the like. If it is recognized on the basis of the driving history that the user often uses "STORE A", information about "STORE A" and other stores similar to "STORE A" is extracted from the feature information about the current position. The concern information is the feature information gotten as a result of dropping information about stores, where the user often visits or which is in an area the user often runs, from the extracted information because the stores are to be well known to the user.

In the mealtime, such as lunchtime or suppertime, information about restaurants is useful for the user. Therefore, it is permitted that the CPU 2 treats the information about restaurants as the concern information upon the current time being the mealtime.

It is permitted that the CPU 2 treats information about a store serving light foods, such as a fast food restaurant, as the concern information in lunchtime (e.g., from 12 o'clock to 13 o'clock). It is permitted that the CPU 2 treats information about a store serving regular foods, such as a restaurant, as the concern information in dinnertime (e.g., from 18 o'clock to 20 o'clock). The concern information is not limited to be applied to the information about the restaurants, and may be applied to information about any of stores and facilities where a degree of relevance to the user is changed in accordance with a time period of the day, a season, and a day of the week.

If the CPU 2 extracts the concern information (S 14), the CPU 2 performs image synthesis of a concern image indicative of the concern information extracted from the hidden information and the video to be displayed on the video display area (S15). The image synthesis may be performed by superimposing the concern image on the video, and may be performed by combining transparently the concern image with the video.

The CPU 2 finally controls the display 8 to display the video on the video display area allocated to the screen of the display 8 (S16). As shown in FIG. 5(b), for example, a landmark 34 and a route search data 35 extracted as the concern information from the hidden information are displayed on the video display area 38 in synthesis with the video 37.

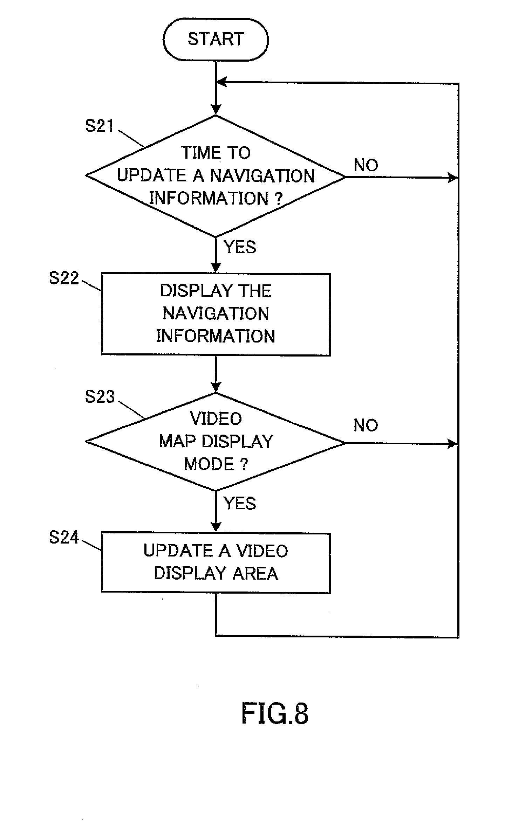

FIG. 8 is a flow chart illustrating a display control operation to the navigation display area by the CPU 2 executing the display control program.

The CPU 2 firstly decides whether or not the current time is to be for updating the navigation information displayed on the navigation display area (S21). If the CPU 2 decides that the current time is to be for updating the navigation information displayed on the navigation display area, the CPU 2 controls the display 8 to display the navigation information about an area specified on the basis of the position of the vehicle obtained by the GPS receiver 9 in the navigation display area allocated to the screen of the display 8 (S22).

Under the state that the CPU 2 assumes the video map display mode (S23), the CPU 2 performs display control operation to the video display area as previously described with reference to FIG 7 (S24). It is permitted that the step S24 is omitted to be operated under the condition that the CPU 2 updates the video displayed on the video display area at adequately short time intervals.

As will be seen from the foregoing description, it is to be understood that the first preferred embodiment of the navigation system according to the present invention permits only the concern information concerned with the user among the navigation information to be displayed on the video display area. The navigation system can therefore prevent the display from displaying the unnecessary information on the video to improve visibility in displaying the video.

### (Second Preferred Embodiment)

The second preferred embodiment of the navigation system according to the present invention has the same hardware construction as the first preferred embodiment of the navigation system 1. Therefore the constitutional elements, the reference numbers, and the terms described in the first preferred embodiment will be continuously used and omitted from the following detailed description.

The second preferred embodiment of the navigation system according to the present invention has a difference with the first preferred embodiment of the navigation system 1 according to the present invention in the display control program to make the CPU 2 execute the display control operation to the video display area as described hereinafter.

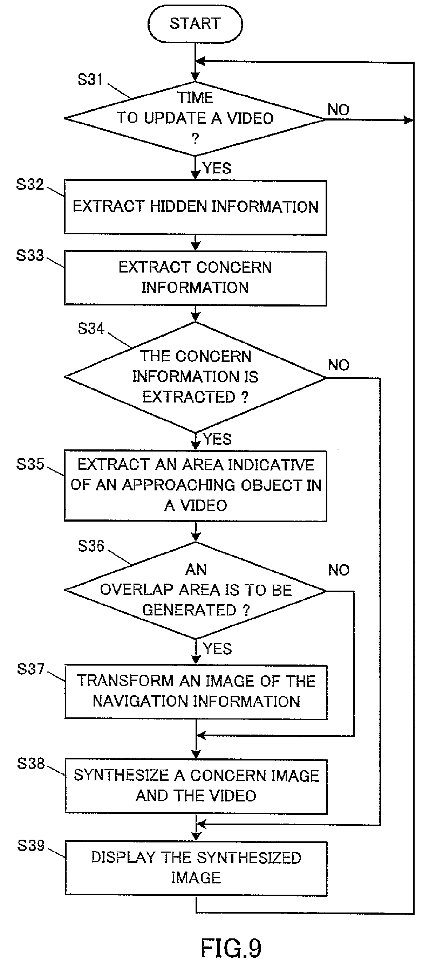

FIG. 9 is a flow chart illustrating a display control operation to the video display area by the CPU2 executing the display control program. The display control operation to the video display area is executed by the CPU 2 in the video map display mode.

The CPU 2 firstly decides whether or not the current time is to be for updating the video displayed on the video display area (S31). If the CPU 2 decides that the current time is to be for updating the video displayed on the video display area, the CPU 2 extracts hidden information (S32) and extracts the concern information from the extracted hidden information (S33).

If the CPU 2 extracts the concern information (S34), the CPU 2 extracts an area indicative of an approaching object from the video (S35). The extraction of the area indicative of the approaching object is realized by an optical flow detection heretofore known (see, for example, Japanese Patent Laid-Open Publication 2004-56763).

The CPU 2 then decides whether or not an overlap area between the display area of the concern image and the area indicative of the approaching object in the video is to be generated by the image synthesis of the concern image indicative of the concern information extracted from the hidden information and the video to be displayed on the video display area (S36).

If the CPU 2 decides that the overlap area is to be generated between the display area of the concern image and the area indicative of the approaching object in the video, the CPU 2 transforms the image of the navigation information to eliminate the overlap area (S37).

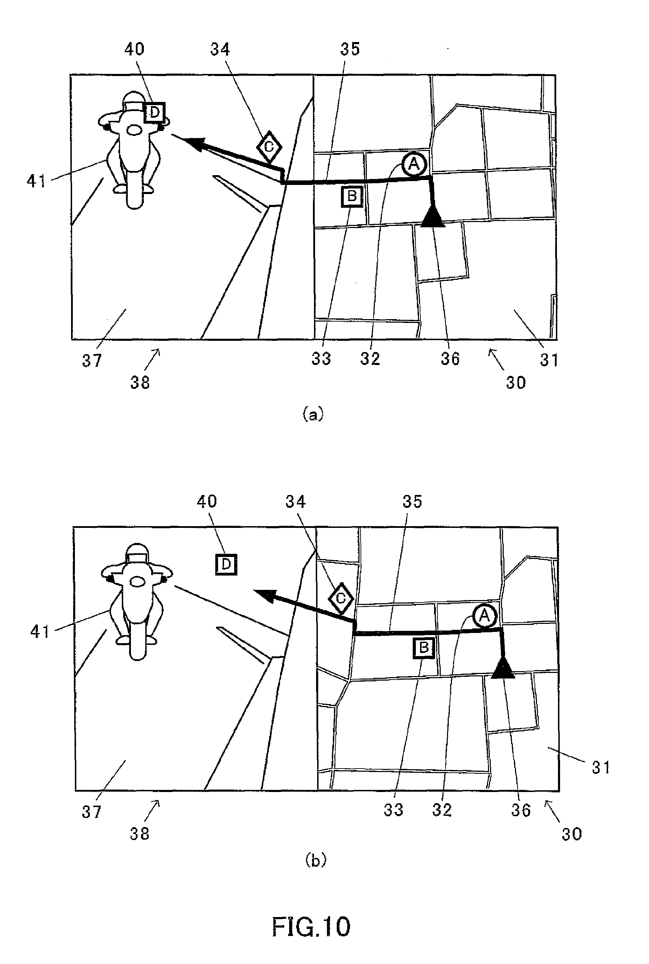

In the case, as shown in FIG. 10(a), for example, that the overlap area is to be generated between a landmark 40 extracted as the concern information and an area 41 indicative of the approaching object, the CPU 2 moves a display position of an image of the navigation information as shown in FIG. 10(b). In FIG. 10(b), the display position of the image of the navigation information is displaced toward a right direction.

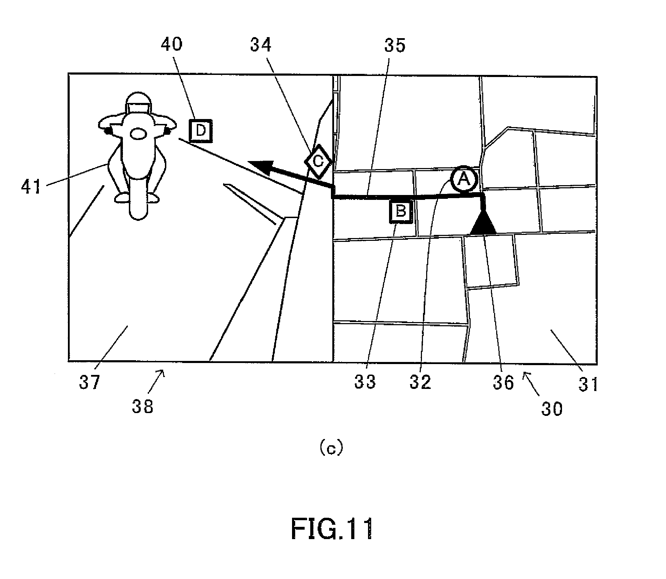

As shown in FIG. 11, the transformation of the image of the navigation information may be realized by changing a scale of the image of the navigation information. In FIG. 11, the scale of the image of the navigation information is increased.

In FIG. 9, the CPU 2 performs the image synthesis of the concern image indicative of the concern information extracted from the hidden information and the video to be displayed on the video display area (S38). The CPU 2 finally controls the display 8 to display the video on the video display area allocated to the screen of the display 8 (S39).

As will be seen from the foregoing description, it is to be understood that the second preferred embodiment of the navigation system according to the present invention can improve visibility of the area indicative of the approaching object on the video display area in spite of display of the concern information.

### Industrial Applicability

As will be seen from the above descriptions, the display controller according to the present invention can prevent a display from displaying the unnecessary information on the video to improve visibility in displaying the video. The display controller according to the present invention is therefore available to the display controller, for example, mounted in a vehicle, for controlling a display to display the video and the navigation information.

## Claims

1. A display controller comprising a controller for controlling a display to display a video and navigation information on respective video and navigation display areas allocated to a screen of the display, wherein
the controller permits concern information concerned with a user among the navigation information to be displayed on the video display area.

2. A display controller of claim 1, wherein
the controller performs image synthesis of the video and an image of the concern information to be displayed on the video display area, for an area where the concern information is displayed on the video display area.

3. A display controller of claim 2, wherein
the controller superimposes the image of the concern information to be displayed on the video display area on the video to perform the image synthesis.

4. A display controller of claim 2, wherein
the controller combines transparently the image of the concern information to be displayed on the video display area with the video to perform the image synthesis.

5. A display controller of claim 1, wherein
the controller transforms an image of the navigation information, under the state that an area indicative of an approaching object in the video and an area of an image of the concern information are to be displayed with an overlap area on the video display area, to eliminate the overlap area.

6. A display controller of claim 5, wherein
the controller changes a scale of the image of the navigation information to transform the image of the navigation information.

7. A display controller of claim 5, wherein
the controller moves a display position of the image of the navigation information to transform the image of the navigation information.

8. A display controller of claim 1, wherein
the controller permits the concern information concerned with a user driving history to be displayed.

9. A display controller of claim 1, wherein
the controller permits the concern information concerned with a route search result of the user to be displayed.

10. A display controller of claim 9, wherein
the controller permits the concern information concerned with a route search history of the user to be displayed.

11. A display controller of claim 8, wherein
the controller permits the concern information concerned with a current position of the user to be displayed.

12. A display controller of claim 8, wherein
the controller permits the concern information concerned with a current time to be displayed.
